## Europäisches Patentamt

(19) **European Patent Office**

**Office européen des brevets**

(11) Numéro de publication: **0 214 931**

**B1**

---

(12) **FASCICULE DE BREVET EUROPÉEN**

(45) Date de publication du fascicule du brevet:
02.08.89

(21) Numéro de dépôt: **86810352.4**

(22) Date de dépôt: **12.08.86**

(51) Int. Cl.⁴: **B 23 Q 5/06**

---

(54) Dispositif d'entraînement pour tour automatique.

---

(30) Priorité: **28.08.85 CH 3691/85**

(43) Date de publication de la demande:
**18.03.87 Bulletin 87/12**

(45) Mention de la délivrance du brevet:
**02.08.89 Bulletin 89/31**

(84) Etats contractants désignés:
**CH DE FR GB IT LI**

(56) Documents cité:
**EP-A-0 097 346**
**CH-A-204 949**
**DE-A-3 029 893**
**DE-C-935 641**
**FR-A-716 606**
**FR-A-844 882**
**FR-A-861 295**
**GB-A-931 288**
**GB-A-1 132 900**
**GB-A-1 217 326**
**US-A-1 352 673**
**US-A-2 036 821**

(73) Titulaire: **Tornos- Bechler SA Fabrique de Machines Moutier, 111 rue Industrielle, CH- 2740 Moutier (Kanton- Bern) (CH)**

(72) Inventeur: **Pruvot, François, Chemin de Ponfilet 82, CH- 1093 La Conversion (CH)**
Inventeur: **Simonin, Jean- Claude, Courtine 35, CH- 2740 Moutier (CH)**
Inventeur: **Favre, Jean- Marc, Egliweg 8, CH- 2560 Nidau (CH)**

(74) Mandataire: **Rochat, Daniel Jean, Bovard SA Ingénieurs- conseils ACP Optingenstrasse 16, CH- 3000 Bern 25 (CH)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif moteur d'entraînement dans un tour automatique d'un outil rotatif destiné à une opération d'usinage en bout sur l'extrémité frontale d'une pièce.

L'usinage en bout d'une pièce formée par exemple à l'extrémité d'une barre dans la poupée d'un tour automatique, est effectuée dans les tours connus selon l'une des deux méthodes suivantes qui, toutes les deux, présentent des inconvénients:

Selon la première méthode, la broche porte-pièce est arrêtée au moment où l'usinage en bout doit être effectué et le chariot porte-outil est déplacé axialement tandis que l'outil est entraîné en rotation. Cette méthode a l'inconvénient d'une perte de temps d'usinage due aussi bien au temps nécessaire pour arrêter la pièce et le cas échéant la remettre en route ensuite, qu'au fait qu'il n'est pas possible d'effectuer une opération de tournage sur la pièce pendant l'opération d'usinage en bout.

Selon la seconde méthode, l'outil en bout et la pièce sont tous deux entraînés en rotation chacun par son moteur propre, la vitesse réelle d'usinage étant égale à la somme ou à la différence des vitesses de rotation de la pièce et de l'outil. Avec cette méthode, les inconvénients mentionnés plus haut sont évités, mais la puissance d'entraînement nécessaire pour le moteur faisant tourner l'outil est plus élevée qu'avec la première méthode. En effet, il faut fournir à l'outil un certain couple d'usinage qui dépend de ses dimensions, du métal de la pièce et de l'opération que l'on désire. Or si ce couple doit être fourni à une vitesse qui est voisine de la vitesse de rotation de la pièce, laquelle peut atteindre plusieurs milliers de tours par minute, la puissance nécessaire à l'entraînement de l'outil est augmentée dans le rapport des vitesses par rapport à celle qui serait nécessaire si l'outil tournait seul, la pièce étant à l'arrêt. De plus, la puissance du moteur d'entraînement doit aussi être augmentée pour éviter qu'au cours de l'usinage l'outil soit entraîné à la vitesse de rotation de la pièce.

Dans les tours automatiques du genre des décolleteuses on avait proposé d'établir une liaison mécanique entre les moyens d'entraînement de la pièce et les moyens d'entraînement de l'outil afin de pouvoir réaliser l'entraînement des deux éléments à partir d'un seul moteur. Cette solution était compliquée et coûteuse et demandait des travaux de mise en route importants avant chaque opération.

On a déjà utilisé des circuits hydrauliques comprenant des pompes et des moteurs hydrauliques dans la commande de machines-outils. Ainsi le brevet US-2 036 821 décrit un système hydraulique entraîné par un moteur électrique et synchronisé avec la commande de la rotation de la pièce, pour déplacer un chariot porte-outil dans un tour. Le brevet GB-1 217 326 décrit l'entraînement de moteurs hydrauliques à partir d'un circuit dont la pression et le débit sont commandés par une pompe à cylindrée variable, elle-même entraînée par un moteur.

Toutefois, le problème de l'entraînement d'un outil en bout dans un tour automatique usinant des pièces à l'extrémité d'une barre, lorsque ce tour est à commande numérique, n'a jamais reçu jusqu'à maintenant une solution vraiment satisfaisante.

Ainsi, la présente invention a pour but de combler cette lacune. Elle a pour objet un dispositif moteur dans un tour automatique comprenant une broche porte-pièce et au moins un porte-outil rotatif dont l'axe est parallèle ou confondu avec celui de la broche, caractérisé en ce qu'il comporte un moteur électrique entraînant simultanément la broche et une pompe, et en ce que la pompe est incorporée à un circuit hydraulique comprenant lui-même un moteur hydraulique qui entraîne le porte-outil.

On va décrire ci-après, à titre d'exemple, une forme d'exécution de l'objet de l'invention en se référant au dessin annexé, dont :

la fig. 1 est une vue schématique et simplifiée du dispositif d'entraînement, et
la fig. 2 une vue également schématique du circuit hydraulique que comporte le dispositif d'entraînement.

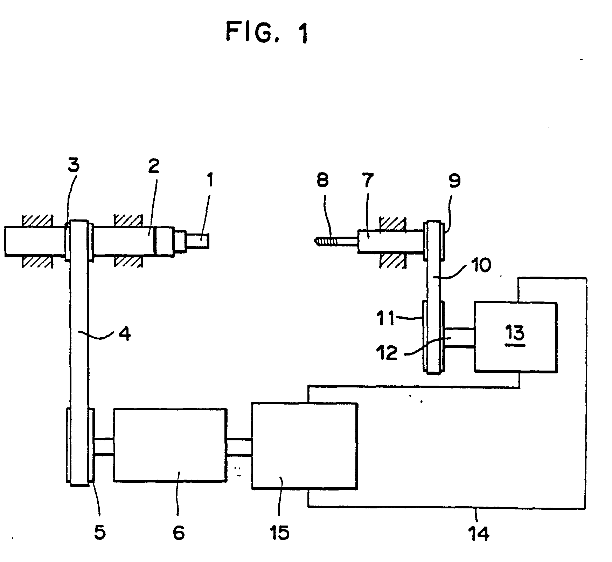

A la fig. 1 on voit certains éléments d'un tour automatique. Une pièce à usiner 1 est fixée par un porte-pièce (non représenté) coaxialement à une broche 2 tournant autour d'un axe fixe. La pièce 1 peut être une pièce en reprise ou au contraire l'extrémité d'une barre d'où les pièces une fois usinées sont sectionnées les unes après les autres. La broche 2 est accouplée à une poulie 3 reliée par une courroie 4 à une poulie homologue 5 accouplée à l'arbre d'un moteur électrique d'entraînement 6. Le moteur 6 est par exemple un moteur à courant continu muni d'un dispositif d'entraînement et de réglage de vitesse agencé de façon à permettre de faire tourner la broche 2 à la vitesse désirée, indépendamment du couple de résistance qui s'oppose à sa rotation.

Le tour décrit peut naturellement comporter une pluralité de porte-outils constitués soit par des porte-outils tournants, soit par des porte-outils fixes et qui sont susceptibles de venir s'engager sur la pièce 1 selon une séquence déterminée. Ainsi notamment, un porte-outil 7, muni d'une mèche 8 est disposé en face de la pièce 1 coaxialement à cette dernière. On notera qu'au lieu d'une mèche de perçage, l'outil 8 pourra également être un outil d'un autre type. Le porte-outil 7 est accouplé à une poulie 9 qui est entraînée par l'intermédiaire d'une courroie 10 par une poulie 11 calée sur l'arbe 12 d'un moteur hydraulique 13. Un circuit hydraulique d'entraînement représenté de façon globale par 14 à la fig. 1, alimente le moteur hydraulique 13 en fluide sous pression. Ce fluide est fourni en circuit fermé, avec la pression et le débit requis par une pompe 15 qui est accouplée au moteur 6.

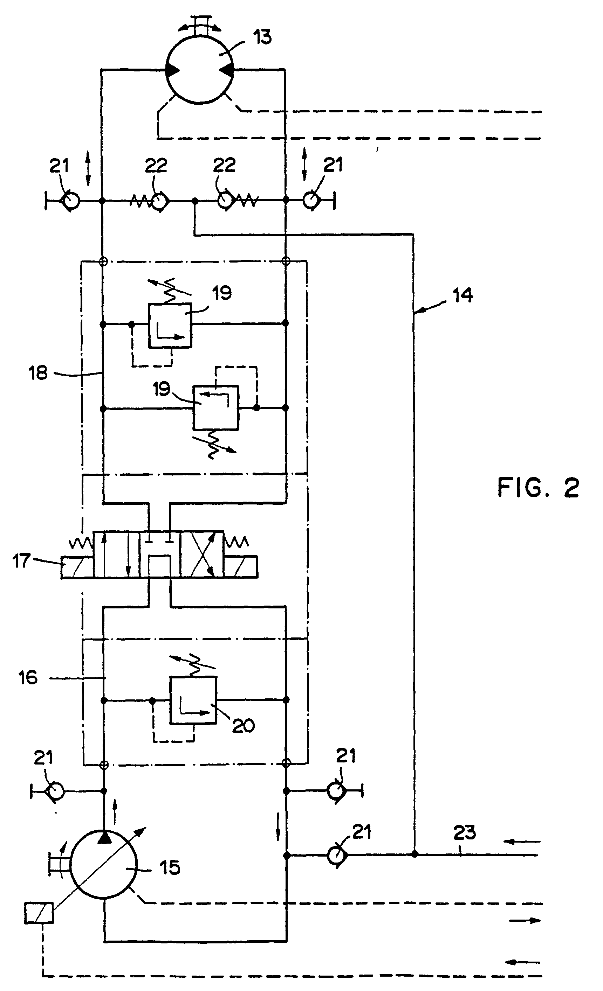

La fig. 2 montre plus en détail comment est constitué le circuit hydraulique 14. La pompe 15 sera de préférence une pompe du type à cylindrée variable. Son arbre accouplé directement ou par l'intermédiaire d'un engrenage à l'arbre du moteur 6 entraînera en rotation, selon une construction connue, par l'intermédiaire d'un ou de plusieurs pistons à déplacement axial, un barillet muni de logements dans lesquels les pistons coulissent. Le barillet, monté sur un axe de pivotement à rotule, est maintenu dans une position inclinée par rapport à l'arbre d'entrée de la pompe et l'inclinaison peut être modifiée au moyen d'une commande 24 de façon à faire varier le débit de la pompe sans changer la vitesse du moteur. Ce dernier tournant toujours dans le même sens, le circuit 16 de la pompe sera parcouru par le fluide moteur toujours dans le même sens et alimentera avec un débit variable suivant la position du barillet de la pompe un distributeur 17 capable d'alimenter le circuit 18 du moteur hydraulique 13 soit dans un sens soit dans l'autre afin de permettre le cas échéant de renverser le sens de rotation du moteur 13. Ce dernier pourra également être constitué par un appareil du même type que la pompe 15 dont l'inclinaison du barillet par rapport à l'axe de l'arbre moteur pourrait être soit fixe soit réglable.

Les deux circuits 16 et 18 comportent d'une part les soupapes de commandes de pression 19 et 20 nécessaires, et d'autre part les clapets 21 ou 22 assurant la sécurité du fonctionnement. Ces deux circuits 16 et 18 sont raccordés à une source d'alimentation 23 qui permet d'une part de compenser en service les pertes de fluide et d'autre part de faire fonctionner le moteur 13 indépendemment de la, pompe 15. Cette dernière éventualité peut être mise en oeuvre lorsque une opération d'usinage en bout sur la pièce 1 doit être réalisée simultanément avec une opération d'usinage transversal.

Le distributeur 17 de même que la commande de la pompe 15 et celle de l'alimentation 23 sont reliés à un circuit électronique sur lequel agissent également des détecteurs des vitesses de rotation du porte-outil 7 et de la pièce 1, et des moyens de commande. Ces derniers permettent de donner au dispositif d'entraînement des consignes sur la vitesse de l'outil 8 ou les différences de vitesses qu'il y a lieu de maintenir entre la pièce 1 et cet outil.

Ces données peuvent être incorporées à un programme de commande numérique des opérations d'usinage. Elles comportent entre des ordres relatifs à la vitesse du moteur 6 ainsi qu'à la vitesse d'avance de la pièce et aux translations des outils et des ordres relatifs au débit de la pompe 15 et à la commande du distributeur 17 qui permet d'arrêter le moteur 13 ou d'inverser son sens de marche.

De façon générale, le système électronique comprendra les moyens nécessaires pour asservir le fonctionnement de la pompe de manière à maintenir la vitesse du moteur à une valeur constante.

Le dispositif décrit présente de nombreux avantages. Ainsi le circuit hydraulique entre la pompe 15 et le moteur 13 est d'une réalisation facile, en utilisant des éléments modulaires. Il peut être conçu en fonction des différents types d'une famille de machines, sur un même modèle, ou en n'apportant que des changements peu importants d'un type à l'autre. Grâce à la pompe hydraulique 15 à cylindrée variable il est possible d'obtenir sur l'outil ou les outils en bout exactement la vitesse désirée, compte tenu de la vitesse de la broche. La variation de vitesse est en effet continue avec la variation de l'angle entre le barillet et l'arbre d'entraînement.

Enfin la puissance consommée par le circuit hydraulique se soustrait nécessairement de celle qui est fournie par le moteur pour l'entraînement de la pièce. En d'autres termes, le dispositif d'entraînement se boucle sur lui-même dans toutes les circonstances de sorte qu'en aucun cas le moteur ne risque de fonctionner en générateur. En effet comme il est le seul organe qui consomme du courant, sa consommation ne peut pas être négative.

Le moteur hydraulique 13 à cylindrée fixe pourrait être remplacé par un moteur à cylindrée variable, ce qui augmenterait l'éventail des vitesses possibles pour l'outil ou les outils en bout. De même le circuit alimenté par la pompe 15 pourrait faire tourner plusieurs moteurs 13, entraînant ainsi plusieurs outils rotatifs.

Dans le cas où une opération d'usinage au moyen d'un outil rotatif doit être effectuée avec la pièce à l'arrêt, le moteur 13 est alimenté directement à partir de la source 23 et le dispositif de commande peut contenir les données nécessaires pour régler aux valeurs désirées la pression et le débit du fluide actionnant le moteur 13. La vitesse de ce dernier peut également être modifiée par réglage de l'inclinaison du barillet rotatif contenant les pistons plongeurs, par rapport à l'arbre d'entrée, s'il s'agit d'un moteur à cylindrée variable.

Finalement, le tour est équipé d'un seul moteur d'entraînement ayant la puissance maximum requise, ce qui au point de vue encombrement et coût est une solution plus avantageuse que les solutions connues dans lesquelles des moteurs séparés entraînent la pièce et l'outil en bout.

## Revendications

Dispositif moteur dans un tour automatique comprenant une broche (2) porte-pièce et au moins un porte-outil (7) rotatif dont l'axe est parallèle ou confondu avec celui de la broche, caractérisé en ce qu'il comporte un moteur électrique (6) entraînant simultanément la broche (2) et une pompe, (15) et en ce que la pompe (15) est incorporée à un circuit hydraulique comprenant lui-même un moteur hydraulique (13) qui entraîne le porte-outil (7).

2. Dispositif selon la revendication 1, caractérisé ence que la pompe (15) est une pompe à pistons multiples à cylindrée variable.

3. Dispositif selon la revendication 1, caractérisé en ce que la pompe (15) et le moteur hydraulique (13) sont du type à pistons multiples à cylindrée variable.

4. Dispositif selon la revendication 2, caractérisé en ce qu'il comporte un système électronique de réglage de la cylindrée de la pompe agencé de manière à maintenir une différence de vitesse prédéterminée entre l'outil et la pièce.

5. Dispositif selon la revendication 1, caractérisé en ce que le circuit hydraulique est raccordé à une alimentation extérieure (23) susceptible de fournir la puissance d'entraînement nécessaire au moteur hydraulique (13) quand le moteur électrique (6) est à l'arrêt.

6. Dispositif selon la revendication 5, caractérisé par des moyens d'asservissement agissant sur le système d'alimentation de manière à maintenir la vitesse du moteur hydraulique à une valeur constante.

7. Dispositif selon la revendication 1, caractérisé ence que le moteur électrique (6) est directement accouplé à la pompe, (15) tandis que le moteur hydraulique (13) est relié au porte-outil par un entraînement à poulies et courroies (9, 10, 11).

**Patentansprüche**

1. Antriebsvorrichtung in einer automatischen Drehmaschine mit einer Werkstückspindel (2) und wenigstens einem Werkzeughalter (7), deren Achse parallel oder fluchtend zu der Werkstückspindel ist, dadurch gekennzeichnet, dass ein gemeinsamer Elektromotor (6) die Werkstückspindel (2) und eine Pumpe (15) antreibt und dass die Pumpe (15) in einem hydraulischen Kreislauf liegt, in welchem sich ein Hydraulikmotor (13) befindet, der den Werkzeughalter (7) antreibt.

2. Vorrichtung nach Anspruch 1, dadurch gekennzeichnet, dass die Pumpe (15) eine Mehrkolbenpumpe mit variablem Hubvolumen ist.

3. Vorrichtung nach Anspruch 1, dadurch gekennzeichnet, dass die Pumpe (15) und der Hydraulikmotor (13) Mehrkolbenaggregate mit variablem Hubvolumen sind.

4. Vorrichtung nach Anspruch 2, dadurch gekennzeichnet, dass eine elektronische Einrichtung zur Regelung des Hubvolumens der Pumpe vorhanden ist zum Einhalten einer vorbestimmten Drehzahldifferenz zwischen dem Werkzeug und dem Werkstück.

5. Vorrichtung nach Anspruch 1, dadurch gekennzeichnet, dass der hydraulische Kreislauf mit einer externen Versorgung (23) zum Liefern der für den Hydraulikmotor (13) erforderlichen Antriebsenergie beim Stillstand des Elektromotors (6) verbunden ist.

6. Vorrichtung nach Anspruch 5, dadurch gekennzeichnet, dass eine auf das Versorgungssystem einwirkende Regelungseinrichtung zum Halten der Drehzahl des Hydraulikmotors auf einem konstanten Wert vorhanden ist.

7. Vorrichtung nach Anspruch 1, dadurch gekennzeichnet, dass der Elektromotor (6) direkt mit der Pumpe (15) gekuppelt ist, während der Hydraulikmotor (13) mit dem Werkzeughalter über einen Riemenantrieb (9, 10, 11) verbunden ist.

**Claims**

1. Driving device in an automatic lathe including a workpiece spindle (2) and at least one rotary tool holder (7), the axis of which is parallel to or merged with that of the spindle, characterized in that it comprises an electric motor (6) simultaneously driving the spindle (2) and a pump (15), and in that the pump (15) is incorporated in a hydraulic circuit comprising in turn a hydraulic motor (13) which drives the tool-holder (7).

2. Driving device according to claim 1, characterized in that the pump (15) is a variable-capacity, multiple-piston pump.

3. Driving device according to claim 1, characterized in that the pump (15) and the hydraulic motor (13) are of the variable-capacity, multiple-piston type.

4. Driving device according to claim 2, characterized in that it comprises an electronic system for regulating the capacity of the pump, arranged so as to maintain a predetermined speed difference between the tool and the workpiece.

5. Driving device according to claim 1, characterized in that the hydraulic circuit is connected to an external feed (23) capable of supplying the driving power necessary to the hydraulic motor (13) when the electric motor (6) is at a standstill.

6. Driving device according to claim 5, characterized by servo means acting upon the feed system so as to maintain the speed of the hydraulic motor at a constant value.

7. Driving device according to claim 1, characterized in that the electric motor (6) is directly coupled to the pump (15), while the hydraulic motor (13) is connected to the tool holder by a pulley-and-belt drive (9, 10, 11).

FIG. 1

EP 0 214 931 B2

FIG. 2

3